# EUROPEAN PATENT APPLICATION

(11) **EP 3 330 447 A1**
(43) Date of publication of application: **06.06.2018**
(21) Application number: 17201851.7
(22) Date of filing: 15.11.2017
(51) Int. Cl.: E04B 1/348, B65D 88/12, B65D 90/00, F02B 63/04

(54) **MOBILE CONTAINER SYSTEM COMPRISING STANDARD-SIZED CONTAINER**

(30) Priority: 02.12.2016 GB 201620456
(71) Applicant: Proventia Emission Control Oy, 90460 Oulunsalo (FI)
(72) Inventor: ANNUNEN, Timo, 90320 Oulu (FI); KERVINEN, Harri, 90540 Oulu (FI)
(74) Representative: Espatent Oy

(57) **Abstract**

A mobile container system comprising a first and a second standard-sized container releasibly securable together, by arranging the respective containers in parallel in a longer direction, each container comprising a cuboid metal frame with standard-sized corners, the respective containers being attached to each other and further comprising reinforcement beams to provide structural strength, wherein the respective containers are secured to each other via locking means arranged between at least one standard-sized corner or reinforcement beam of the first container and corresponding standard-sized corner or reinforcement beam of the second container, further wherein at least a portion of side walls of the respective containers, facing each other, are removed to provide enlarged interior space extending at least partially over both containers, the mobile container system being a mobile test unit system, wherein the portion of the side walls are removed to provide enlarged interior operating space as a test room extending over both containers, and the mobile test unit system further comprising a vehicle component exchangably arranged within the test room, and the mobile container system is configured to provide fire protected enlarged interior.

## Description

### TECHNICAL FIELD

The invention relates to an arrangement for releasably securing a plurality of standard-sized containers together to form a mobile container system, such as mobile test unit. Furthermore the invention relates to fireproof sealing of the system and exchangeability of tested units, such as combustion engines.

### BACKGROUND

This section illustrates useful background information without admission of any technique described herein being representative of the state of the art.

The present invention aims to mitigate the problems of the previous solutions by providing an arrangement that can be used to build a cost effective high performance fireproof arrangement for a plurality of containers.

The purpose of the invention is to disclose a structure of a modular container system, such as a test unit for a combustion engine test laboratory from fire hazard perspective. The purpose is to define solutions to prevent spreading fire from inside the test unit to outside of the unit.

Recent trends toward globalization have hastened the adoption of certain standards to facilitate the exchange of goods. In particular, container-based freight transport allows shippers to manage transport of standard sized containers, with little or no regard from what they might contain. The International Organization for Standardization (ISO) has been a leader in the development and adoption efforts of such containers. The ISO maintains standards of such general purpose and specific purpose containers, available online at www.iso.org. According to the ISO, millions of freight containers are now in service throughout the world. Assurances that shippers will handle such large volumes of standard sized containers, has allowed shippers to invest in infrastructure that is largely tailored to such standard sized containers.

ISO containers, or containers complying with ISO-standards have fittings in corners of the container to enable lifting and handling the container.

The fittings for the top and bottom corners of containers provide compatibility in interchange between transportation modes. The size and configuration of corner fitting apertures are specified. The faces of the corner fittings having apertures for the engagement of handling and securing devices have specified thickness and tolerances. The thickness of the blank walls is not specified since they are not involved in the engagement of the handling and securing devices, provided that their inner surfaces do not protrude into the corner fitting cavity reserved for the engaging devices.

Under the ISO standards, there are five common standard lengths, 20 ft, 40 ft, 45 ft, 48 ft, and 53 ft. Container capacity is often expressed in twenty-foot equivalent units (TEU). For air transport, the International Air Transport Association (IATA) has created a similar set of standards for aluminum container sizes designed for aircraft and associated ground handling equipment. One of the benefits of such intermodal containers is that they can be loaded at one location and delivered to a destination by various modes (e.g., ship, rail, truck) without having to open the containers.

During transportation, storing and implementation of modular container system of a plurality of containers, reliable and effective solutions are required. Thus there is a need to releasibly secure the containers together and provide advanced solutions for fire-proof solutions for the containers.

### SUMMARY

Various aspects of examples of the invention are set out in the claims.

According to a first example aspect of the present invention, there is provided a mobile container system comprising:
a first and a second standard-sized container releasibly securable together, by arranging the respective containers in parallel in a longer direction, each container comprising a cuboid metal frame with standard-sized corners, the respective containers being attached to each other, and further comprising reinforcement beams to provide structural strength;
wherein the respective containers are secured to each other via locking means arranged between at least one standard-sized corner or reinforcement beam of the first container and corresponding standard-sized corner or reinforcement beam of the second container;
further wherein at least a portion of side walls of the respective containers, facing each other, are removed to provide enlarged interior space extending at least partially over both containers;
the mobile container system being a mobile test unit system, wherein the portion of the side walls are removed to provide enlarged interior operating space as a test room extending over both containers, and the mobile test unit system further comprising:
   a vehicle component exchangably arranged within the test room; and
the mobile container system is configured to provide fire protected enlarged interior, by further comprising:
   a fire-proof material layer arranged on inner surface of ceiling, side walls, floor, front wall and rear end of the first and the second container; and
   a fire-proof seam arranged to at least one of the following:
      front wall between the first and the second container;
      rear end between the first and the second container;
      rear end between double doors of the first or the second container;
      horizontal reinforcement beam of the first or the second container;
      vertical reinforcement beam of the first or the second container; and
      a standard-sized corner of the first or the second container.

In an embodiment, the respective containers are attached to each other from the corners, ceiling, side walls, floor, front wall or rear end.

In an embodiment, the fire-proof material layer comprises:
a mineral wool layer; and
a trim panel covering the mineral wool layer.

In an embodiment, the fire-proof seam comprises elastic fire-proof sealant.

In an embodiment, the mobile container system further comprises a first fire-proof material layer arranged on the inner surface of the horizontal ceiling on a first side of a standard-sized corner of the first or the second container, and a second fire-proof material layer arranged on the inner surface of the vertical side wall on a second side of the standard-sized corner of the first or the second container, wherein the first and the second fire-proof material layers are overlapping each other at least partially to cover an inner surface of the standard-sized corner.

In an embodiment, the mobile container system further comprises a first fire-proof material layer arranged on the inner surface of the horizontal floor on a first side of a standard-sized corner of the first or the second container, and a second fire-proof material layer arranged on the inner surface of the vertical side wall on a second side of the standard-sized corner of the first or the second container, wherein the first and the second fire-proof material layers are overlapping each other at least partially to cover an inner surface of the standard-sized corner.

In an embodiment, the mobile container system further comprises at least two ISO standard containers combined together as a mobile workroom, comprising a cuboid metal frame of corners and edge profiles connecting the corners.

In an embodiment, the mobile container system further comprises a girder plate placed to a hollow interior of a bottom side rail of at least one container when assembling the containers together, wherein a girder plate width is selected so that it matches the diagonal inner length of the interior of the bottom side rail when assembled.

In an embodiment, the girder plate guides the containers to be attached with each other and leveling floor plates of the adjacent containers.

In an embodiment, the mobile container system further comprises at least a section of the interior of the bottom side rail of at least one container is filled with fire-proof material after placement of the girder plate and attaching the containers together.

In an embodiment, a platform is arranged below the containers in order to enable sliding of the second container towards and to connection with the first container.

In an embodiment, the mobile container system further comprises at least one of the following:
an air heating system;
a ventilation system;
an air conditioning system;
an air moisturizing system
an air dryer system;
a condenser system;
a silencer system;
a fuel delivery unit;
a compressor unit;
an exhaust gas extractor system;
an exhaust gas after-treatment system;
a calibration gas delivery system;
a battery system; and
a telecommunication system.

In an embodiment, the mobile container system is a mobile test unit system, wherein at least a portion of the side walls of the respective containers, facing each other, are removed to provide enlarged interior operating space as a test room extending over both containers, and the mobile test unit system further comprising:
a vehicle component exchangably arranged within the test room.

In an embodiment, the vehicle component comprises at least one of the following: a combustion engine, an electric motor, a hybrid system, a battery cell, a gearbox and a powertrain component.

In an embodiment, the mobile container system further comprises a modular roof component exchangably arranged on top of the roof of at least one container, the modular roof component comprising at least one of the following:
an air heating system;
a ventilation system;
an air conditioning system;
an air moisturizing system
an air dryer system;
a condenser system;
a silencer system;
a fuel delivery unit;
a compressor unit;
an exhaust gas extractor system;
an exhaust gas after-treatment system;
a calibration gas delivery system;
a battery system; and
a telecommunication system.

In an embodiment, the mobile container system further comprises a modular inner component exchangably arranged at least partially within one container, the modular inner component comprising at least one of the following:
an air heating system;
a ventilation system;
an air conditioning system;
an air moisturizing system
an air dryer system;
a condenser system;
a silencer system;
a fuel delivery unit;
a compressor unit;
an exhaust gas extractor system;
an exhaust gas after-treatment system;
a calibration gas delivery system;
a battery system; and
a telecommunication system.

In an embodiment, a modular component may be partially an inner component and partially a roof component.

In an embodiment, the mobile container system further comprises an automatic fire extinction arrangement.

In an embodiment, the automatic fire extinction arrangement is configured to restrict oxygen inside the mobile container system to a level where burning does not happen.

In an embodiment, the interior space of the mobile container system is automatically filled with inert gas and automatically closing openings including doors and air ducts.

In an embodiment, the automatic fire extinction arrangement comprises inert gas tanks and piping.

In an embodiment, the vehicle component may also comprise any equipment used or needed regarding testing of the vehicle component.

According to a second example aspect of the present invention, there is provided a method to provide a mobile container system of the first aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic picture of a system according to an example embodiment of the invention;
Fig. 2 illustrates a mobile container system according to an embodiment of the invention, wherein the system is shown from a front end of the container arrangement;
Fig. 3 illustrates a mobile container system according to an embodiment of the invention, wherein the system is shown from a rear-sideview end of the container arrangement;
Fig. 4 illustrates a fire-proof-arrangement in an area B between a container roof and a reinforcement beam;
Fig. 5 illustrates a fire-proof-arrangement in an area C between a container floor and a reinforcement beam of the system;
Fig. 6 illustrates a fire-proof-arrangement between a first container and a second container from rear end of the system;
Fig. 7 illustrates a fire-proof-arrangement for rear end double doors of a first container and a second container of the system;
Fig. 8 illustrates a fire-proof-arrangement of a sealing structure on rear end double doors upper end;
Fig. 9 illustrates a mobile container system according to an embodiment of the invention, wherein the system is shown from a side view of the container arrangement;
Fig. 10 illustrates a mobile container system according to an embodiment of the invention, wherein the system is shown from a cross-sectional view across the axis E of Fig. 9 of the container arrangement;
Fig. 11 illustrates a fire-proof-arrangement in an area F between container roofs and reinforcement beams. This area is illustrated as corner "F" in Fig. 10.
Fig. 12 illustrates a mobile container system according to an embodiment of the invention, wherein the system is shown from a rear-end of the container arrangement;
Fig. 13 illustrates area "D" of Fig. 12 showing container bridge fittings that interconnect two adjacent containers using the standard-sized corner fittings of the containers;
Fig. 14 illustrates an exhaust pipe prefabricated inlet bushing that is welded into a roof structure of at least one of the containers;
Fig. 15 illustrates an exhaust pipe prefabricated inlet bushing that is welded into a roof structure of at least one of the containers from outside view;
Fig. 16 illustrates a mobile container system according to an embodiment of the invention from above;
Fig. 17 illustrates a fire-proof-arrangement in front end area (control room end) of the system showing container structures and reinforcement beams;
Fig. 18 illustrates upper fittings arranged on the roof of at least one container above the upper bridge fitting connecting containers using standardized corner fittings of the containers;
Fig. 19 illustrates a fire-proof-arrangement in control room end of the system comprising adjacent containers;
Fig. 20 illustrates a mobile container t system from above view according to an embodiment of the invention; and
Figs. 21a-c illustrate a fire-proof-arrangement between a first container and a second container according to embodiments of the invention.

### DETAILED DESCRIPTON OF THE DRAWINGS

The present invention and its potential advantages are understood by referring to the drawings. In this document, like reference signs denote like parts or steps.

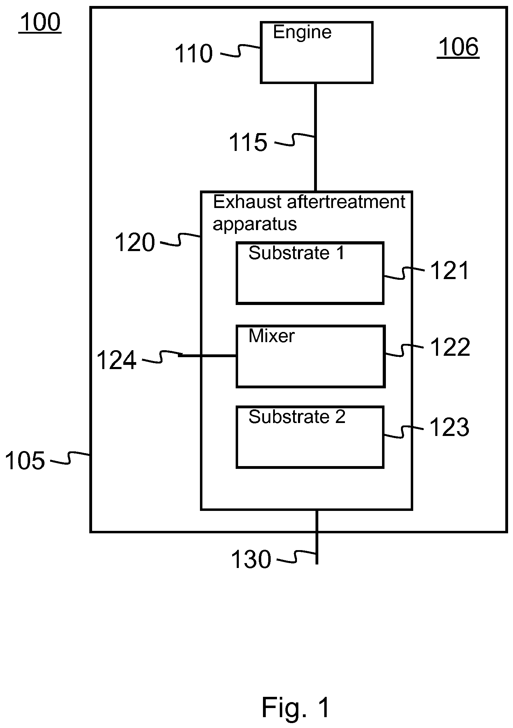

Fig. 1 shows a schematic picture of a system according to an example embodiment of the invention. A mobile container system 100 is shown.

The mobile container system 100 comprises a container arrangement 105 of a first and a second standard-sized container releasibly securable together (not shown in Fig. 1).

The mobile container system 100 may comprise an interior 106, such as a mobile working space. The mobile container system 100 may also comprise a mobile server hotel or a secure closed interior space for crisis areas or any remote site needing mobile system for operating space or storage, for example.

The mobile container system may be a mobile test unit system 100 that may further comprise an exchangeable engine 110 and an exhaust aftertreatment apparatus 120. Furthermore, the system 100 may comprise other devices that are not shown in the Fig. 1. Such devices comprise, for example, a fuel storage for the engine 110 (e.g. diesel), and an air intake device including an air filter.

Fig. 1 shows a connection 115 between the engine 110 and the exhaust aftertreatment apparatus 120. The connection 115 may comprise a pipe for guiding exhaust gas from the engine 110, for example.

The exhaust aftertreatment apparatus 120 receives the exhaust gas from the engine 110 over the connection 115. In an embodiment, the apparatus 120 comprises a first substrate 121 (for example a catalytic converter, such as diesel oxidation catalyst (DOC) device and/or a filter, such as a diesel particulate filter (DPF), a mixer 122 and a second substrate 123 (for example a selective catalytic reduction (SCR) device). The devices 121-123 are in an embodiment implemented within the same housing of the apparatus 120 but at least one of the devices 121, 123 may also be placed outside the housing of the apparatus 120 but within the test system 105. In some embodiments at least part of the devices 115-130 may also be placed outside the test system 105. A connection 124 for receiving reactant for the mixer 122 is also disclosed. The apparatus 120 may further comprise devices not shown in Fig. 1, such as doser for the reactant, storage for the reactant (such as urea or ammonia), gas flow guides and connections within the apparatus 120.

First substrates 121, such as catalytic converters (diesel oxidation catalysts or DOC's) are typically used in an exhaust system to convert undesirable gases such as carbon monoxide and hydrocarbons from engine's exhaust into carbon dioxide and water. DOC's may have different configurations. The substrates used in catalytic converters preferably include a catalyst.

Another first substrates 121, such as a diesel particulate filter (DPF) may also be implemented together or alternatively to the DOC in an exhaust system to remove particulate matter (e.g., carbon based particulate matter such as soot) from the exhaust. DPF's can have a variety of known configurations.

The second substrate 123, such as the selective catalytic reduction (SCR) catalyst device is typically used in an exhaust system to remove undesirable gases such as nitrogen oxides (NOx) from the engine's emissions. SCR's are capable of converting NOx to nitrogen and oxygen in an oxygen rich environment with the assistance of reactants such as urea or ammonia, which are injected into the exhaust gas upstream of the SCR device 123.

A mixer 122 is configured to receive exhaust gas from the engine 110 over connection 115, which gas is possibly run through a first substrate 121, such as DOC or DPF, as disclosed above. The mixer 122 receives also reactant, such as diesel exhaust fluid (DEF), over the connection 124, the reactant commonly referred to as AdBlue™ that is an aqueous urea solution made with 32.5% high-purity urea and 67.5% deionized water. DEF may be used as a consumable in selective catalytic reduction (SCR) in order to lower NOx concentration in the diesel exhaust emissions from diesel engines. The mixer 122 is configured to mix the exhaust gas and the reactant and also to reduce urea deposits in exhaust pipelines. When SCR process uses DEF, it can cause urea deposits in exhaust pipes, especially in off-road applications using airless DEF injectors. Larger DEF spray droplets might lead to wall wetting and film formation on exhaust pipe inner surfaces, causing deposits when the local temperatures are low. Urea deposit problems have become frequent and critical, and the mixer 122 is configured to keep pipelines clean by evenly distributing the reactant to the exhaust gas in the shortest possible pipe length and avoiding this way the wall wetting and film formation.

The apparatus 120 may also help water evaporation from DEF and ensures optimal reactions with the reactant with no unwanted side effects. The apparatus 120 may be used with all reactant dosers (e.g. urea or ammonia) to achieve even NH3 distribution within the exhaust gas. Further benefit is experienced with airless injectors, which have rather large Sauter mean diameter (SMD) and when the injection must start at low temperatures. An exhaust gas outlet pipe 130 guides the aftertreated exhaust gas from the apparatus 120.

In an embodiment, the apparatus 120 is configured to inject small droplets of reactant, such as urea-water solution, to the exhaust gas flow and causing the reactant to vaporize in an exhaust gas flow channel defined by interior of the housing of the apparatus housing and to react with the nitric oxides of the exhaust gas and changing them to plain nitrogen. Such final change to nitrogen takes place in SCR catalysator of the second substrate 123.

In an embodiment, the engine 110 is arranged exchangeable so that different combustion engines and other vehicle components may be tested using the mobile test system 100.

The vehicle component may comprise, for example, at least one of the following: a combustion engine, an electric motor, a hybrid system, a battery cell, a gearbox and a powertrain component.

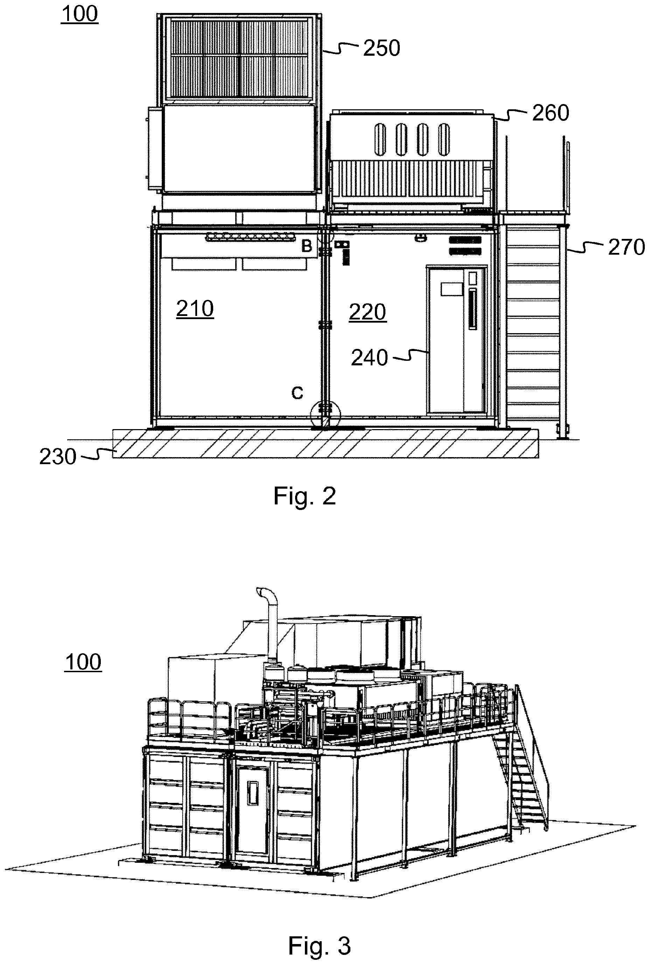

Fig. 2 illustrates a mobile container system 100 according to an embodiment of the invention, wherein the system 100 is shown from a front end view of the container arrangement.

In an embodiment, a mobile container system 100 comprises two 12-meter shipping (ISO) containers 210, 220 that are joined together from the long side. Interior space may be divided diagonally in two compartments, an engine room and an operator control room. Both the engine room and the control room are considered as one space and a single fire compartment from the fire & safety classification point of view. Fig. 2 shows the two containers 210, 220 joined together.

In an embodiment, a platform 230 may be arranged below the containers 210, 220 in order to ease the assembly of the containers 210, 220 as well as tearing down the mobile system 100. Corners B and C are illustrated for further disclosure relating to fire-proof arrangements. At least one fire-proof door 240 may be arranged to the system 100, as well.

In an embodiment, the system 100 may comprise further test unit equipment 250, 260 placed on the roof of the containers 210, 220. Equipment may also be placed at least partially inside at least one of the containers 210, 220. Furthermore, a ladder or stairs 270 may be arranged externally to the containers 210, 220 to enable test engineers or operators to move around the system 100. At least one of the external equipment 250-270 may be exchangeable and removable to ease up transportation of the mobile container system 100 and to provide easy handling of standard-sized containers.

In an embodiment, automatic fire extinction is arranged to the system 100. The automatic fire extinction may based on restricting oxygen inside of the test unit 100 on the level where burning does not happen anymore. This situation is achieved by filling interior space of the containers with inert gas and by closing all openings, including doors and air ducts.

The mobile container system 100 may be equipped with automatic fire suppression system. Such system may, for example, consist inert gas tanks and piping that are installed inside assuring effective and equipment safe fire suppression method. Also other systems like water mist systems can be arranged as well. Further components of automatic fire extinction system may comprise automatically closing exit doors and air ducts.

In an embodiment, the system 100 comprises at least one sensor to provide fire alarm signal. A controller device of the system 100 may receive the fire alarm signal to automatically control all openings, such as doors and air ducts to automatically close. Test engine fuel inlet and air intake inlet may also be automatically closed, as well as all engine outlets, for example.

Fig. 3 illustrates a mobile container system 100 according to an embodiment of the invention, wherein the system 100 is shown from a rear-sideview end of the container arrangement.

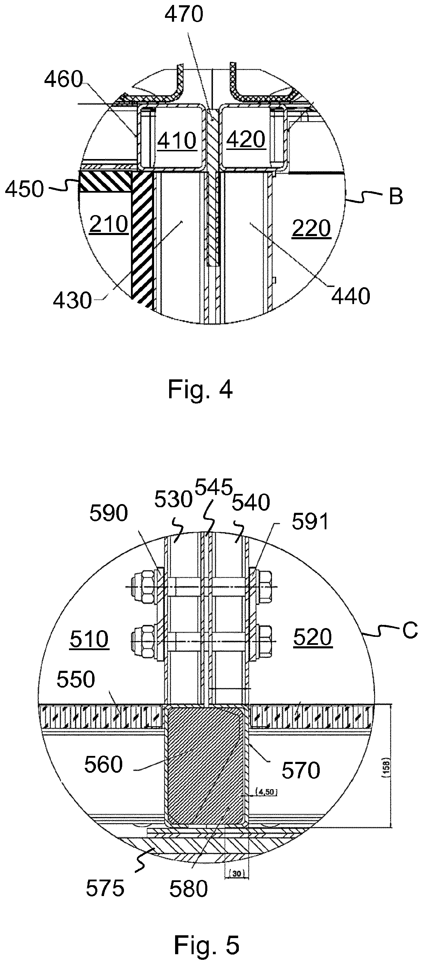

Fig. 4 illustrates a fire-proof-arrangement in an area B between a container roof and a reinforcement beam. This area is illustrated as corner "B" in Fig. 2.

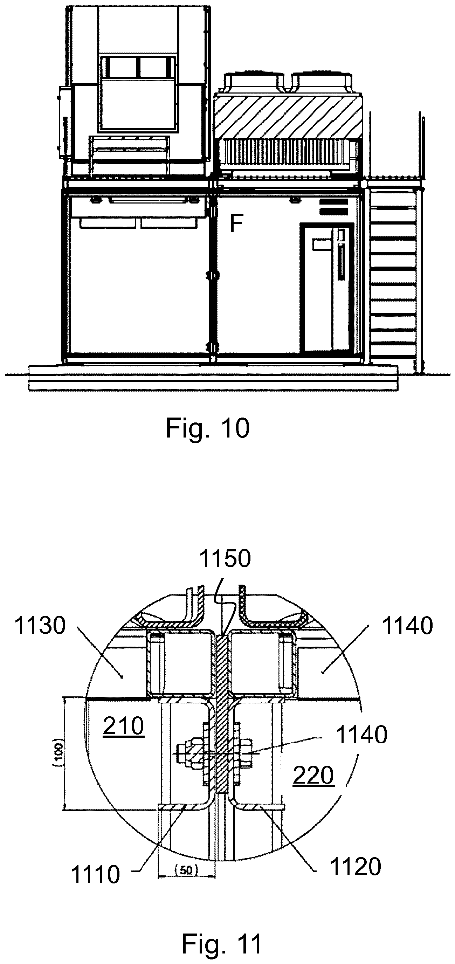

In an embodiment, a first 210 and a second standard-sized container 220 are releasibly securable together, by arranging the respective containers 210, 220 in parallel in a longer direction, each container 210, 220 comprising standard-sized external corners (not shown) and a cuboid metal frame of top side rails 410, 420, and vertical reinforcement beams 430-440 connecting to the top side rails 410, 420. Each container 210, 220 further comprises ceiling, side walls, floor, front wall and rear end. The vertical reinforcement beams 430-440 are configured to provide further support for the cuboid metal frame to carry the additional load placed on top of the container(s). The vertical reinforcement beams 430-440 are connected via U-shaped elements (not shown in Fig. 4, see e.g. Fig. 11) to the top side rails 410, 420 to provide support for carrying the load on top of the container(s). The vertical reinforcement beams 430-440 may not be parts of the original standard-size containers 210, 220 but added when converting the containers to mobile container system.

In an embodiment, each respective container 210, 220 are secured to each other via locking means arranged between at least one of following: between standard-sized corners of adjacent standard-sized containers 210, 220, between top side rails 410, 420 of adjacent standard-sized containers 210, 220 or between reinforcement beams 430, 440 of the adjacent standard-sized containers 210, 220.

At least a portion of the side walls of the respective containers 210, 220 facing each other are removed to provide enlarged interior operating space as a test room, for example, extending over both containers.

A fire-proof material layer 450 is arranged on inner surface of a ceiling 460, side walls, floor, front wall and rear end of the first 210 and the second container 220. In Fig. 4, only one container's ceiling and sidewall surface is covered by the fire-proof material layer 450 for simplicity.

In an embodiment, the fire-proof material layer 450 comprise a mineral wool layer and a trim panel covering the mineral wool layer, arranging the mineral wool layer between the container wall and the trim panel.

A fire-proof seam 470 is arranged to at least one of the following: a front wall (or at least a portion of it) between the first and the second container, rear end (or at least a portion of it) between the first and the second container, between rear end double doors of the first or the second container, horizontal reinforcement beam of the first or the second container, vertical reinforcement beam of the first or the second container; and a standard-sized corner of the first or the second container. In Fig. 4, the fire-proof seam 470 is arranged between the top side rails 410, 420 of adjacent standard-sized containers 210, 220 and partially extending also between reinforcement beams 430, 440 arranged to the standard-sized containers 210, 220.

In an embodiment, the fire-proof seam 470 comprises an elastic fire-proof sealant or a combination of different elastic fire-proof sealants.

In an embodiment, a first fire-proof material layer 450 is arranged on the inner surface of the horizontal ceiling 460 on a first side of a top side rail 410, 420 of the first 210 or the second container 220, and a second fire-proof material layer 450 is arranged on the inner surface of the vertical side wall on a second side of the top side rail 410, 420 of the first 210 or the second container 220, wherein the first and the second fire-proof material layers 450 are overlapping each other at least partially to cover an inner surface of the top side rail 410, 420 to provide fire-proof arrangement.

Container walls and ceiling are insulated against fire, temperature and noise by attaching fire-proof material layer 450, such as fireproof mineral wool elements on inner surface of the container walls and ceiling. These elements may also be attached on rear end pair doors. Mineral wool elements may also be used in control room of the system 100. Front-end single door leading to the control room may be, for example, an EI60 class fire-proof door.

In an embodiment, wall and ceiling insulation structure may comprise from outside to inside:
- Container frame 460, such as corrugated steel with thickness of 2 mm; and
- Fire proof element 450 that comprises;
   - Fire proof material (e.g. mineral wool, such as stone wool or Rockwool) with thickness of at least 50 mm; and
   - Trim panel (inner surface of element 450)
      ∘ in engine room, perforated stainless steel AISI 304 R3T5, thickness 1 mm
      ∘ in control room, fire resistant plywood interior lining, thickness approx. 10 mm

Fig. 5 illustrates a fire-proof-arrangement in an area C between a container floor and a vertical reinforcement beam within the middle part (at least one vertical reinforcement beam between the front wall and the rear end) of the system 100. This area is illustrated as corner "C" in Fig. 2.

A seam between two vertical beams 530, 540 of the adjacent containers 510, 520 in middle part of the containers are sealed with elastic fire-proof sealant 545.

A floor plate 550 may comprise a container frame, such as corrugated steel and a fire-proof element arranged on top of it and comprising mineral wool and a trim panel (inner/upper surface of element 550).

A girder plate 560 may be arranged for leveling floor plates of the adjacent containers. The girder plate 560 may be used to guide the containers to be attached with each other when assembling the container system. Furthermore, the girder plate 560 may be arranged to provide a self-supporting floor structure, wherein a floor structure of a first container may be arranged to support a floor structure of a second. Thus, a floor structure with lighter load may be arranged to support a floor structure with a heavier load, for example.

A bottom side rail 570 of a container may be hollow and comprise the girder plate 560. Furthermore, the hollow bottom side rail may be filled with fire-proof material 580 such as fireproof polyurethane foam. The girder plate 560 may also provide fire-proof blocking plate within the hollow bottom side rail 570 of a container.

Locking plates 590, 591 may be used for locking the reinforcement beams 530, 540 of the adjacent standard-sized containers 510, 520.

In an embodiment, when assembling the containers 510, 520 together the girder plate 560 is placed to the hollow interior of the bottom side rail 570. The girder plate 560 width is selected so that it matches the diagonal inner length of the interior of the bottom side rail 570 when assembled. The effect of such selection is that the girder plate 560 guides the containers to be attached with each other and leveling floor plates of the adjacent containers. A platform 575 may be arranged below the containers in order to ease the assembly of the containers as well as tearing down the system. The platform eases sliding of the second container towards and to connection with the first container. The girder plate 560 may be in different shapes, for example triangle-shaped.

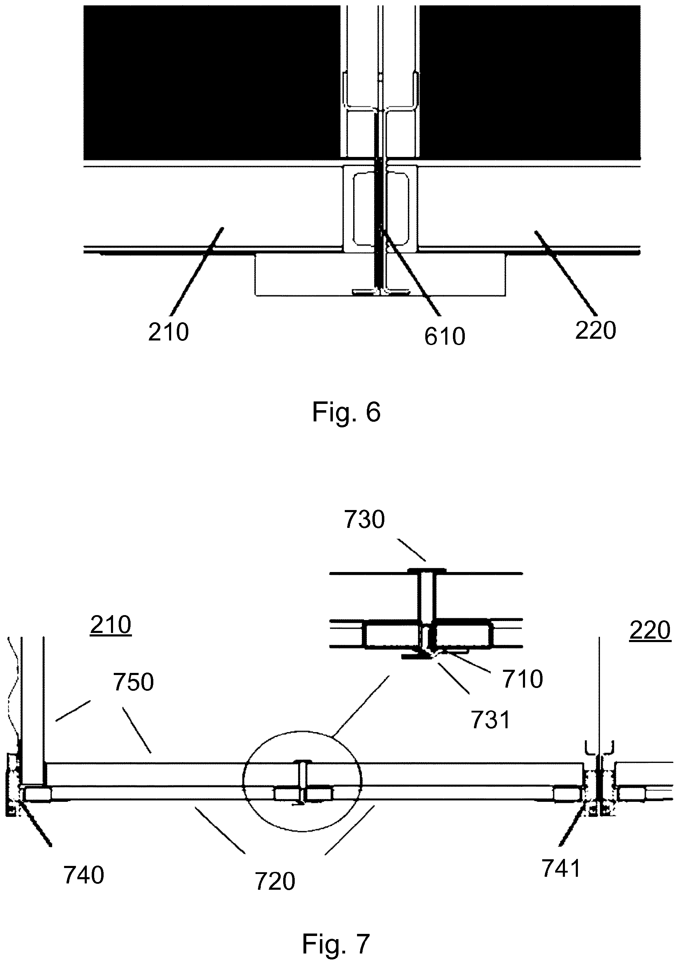

Fig. 6 illustrates a fire-proof-arrangement between a first container 210 and a second container 220 from rear end of the system 100.

In an embodiment, a fire-proof seam 610 is arranged in rear end of the system. The seam 610 between two beams is sealed with elastic fire-proof sealant. Rear end doors and hinges are not shown in Fig. 6.

Fig. 7 illustrates a fire-proof-arrangement between a first container 210 and a second container 220 for rear end double doors of the system 100.

The structure of rear end doors is illustrated in closed position. Gas tight seam 710 between door leafs 720 is implemented, for example, with elastic seal, for example rubber seal. Elastic sealing 710 is protected against heat, flames and mechanical impacts by cover plates 730, 731 that are installed on both sides of the door 720.

In an embodiment, further elastic sealing 740 may be applied around the double doors 720, including seams between container floor, ceiling and side walls. Hinge-side of the door leaf 720 may be sealed in similar way as between the door leafs 720 and the sealing may be protected by push connection between fireproof material layer 750, such as mineral wool elements. This occurs when a door 720 is in closed position.

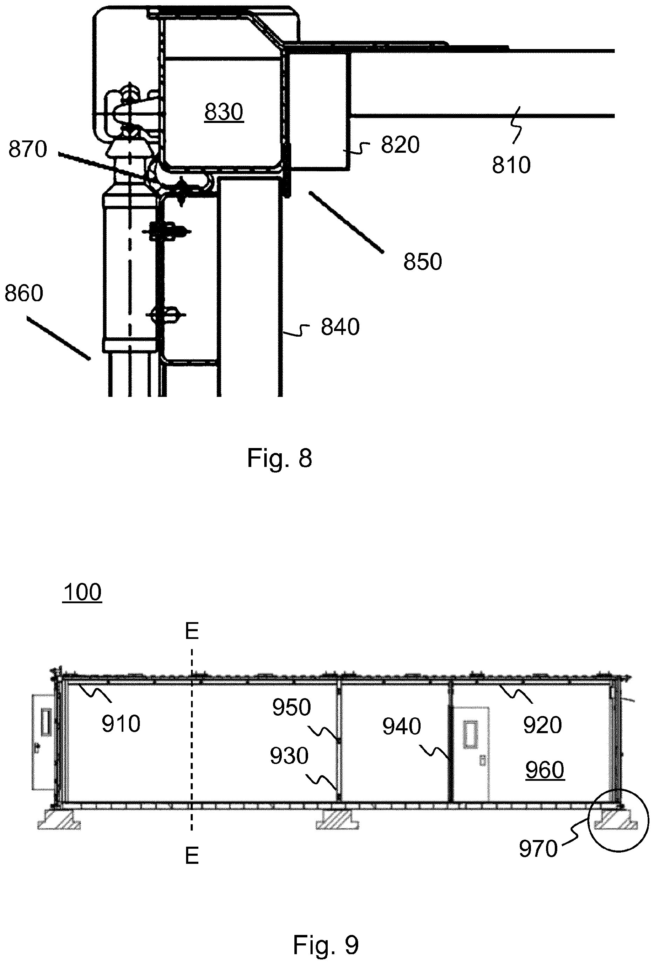

Fig. 8 illustrates a fire-proof-arrangement of a sealing structure on rear end double doors upper end. First fireproof material element 810, such as mineral wool layer covered by a trim panel, is arranged on inner surface of a container ceiling. Second fireproof material element 820, such as mineral wool layer covered by a trim panel, is arranged on inner surface of the container's reinforcement beam or top side rail 830. The first and second fireproof material elements 810, 820 are arranged so that the reinforcement beam or top side rail 830 is fully covered on the vertical side of the reinforcement beam or top side rail 830. Third fireproof material element 840, such as mineral wool layer covered by a trim panel, is arranged on inner side of the container's door 860 so that the element 840 is connected to horizontal side of the reinforcement beam or top side rail 830 and extending vertically downwards from the reinforcement beam or top side rail 830 to fire-proof the door 860. A vertical cover plate 850 is arranged between the second fireproof material element 820 and the third fireproof material element 840 so that the vertical cover plate 850 extends in upper end between the second fireproof material element 820 and the vertical side of the container reinforcement beam or top side rail 830. The vertical cover plate 850 extends in lower end over the third fireproof material element 840 and thus covering the interface between the reinforcement beam or top side rail 830 and the third fireproof material element 840.

In an embodiment, the third fireproof material element 840 is pressed against the vertical cover plate 850 when the door 860 is in closed position and a rubber sealing 870 is protected from fire and heat.

In an embodiment, fire-proof sealing on door 860 lower edge may be carried out correspondingly or by a tight fitting between the third fireproof material element 840 and container floor.

Fig. 9 illustrates a mobile container system 100 according to an embodiment of the invention, wherein the system 100 is shown from a side view of the container arrangement. To illustrate fire-proof sealing arrangement relating to reinforcement beam(s) and/or reinforcement beams for external structures, such as ladders for test engineers, a view axis E is shown for further disclosure.

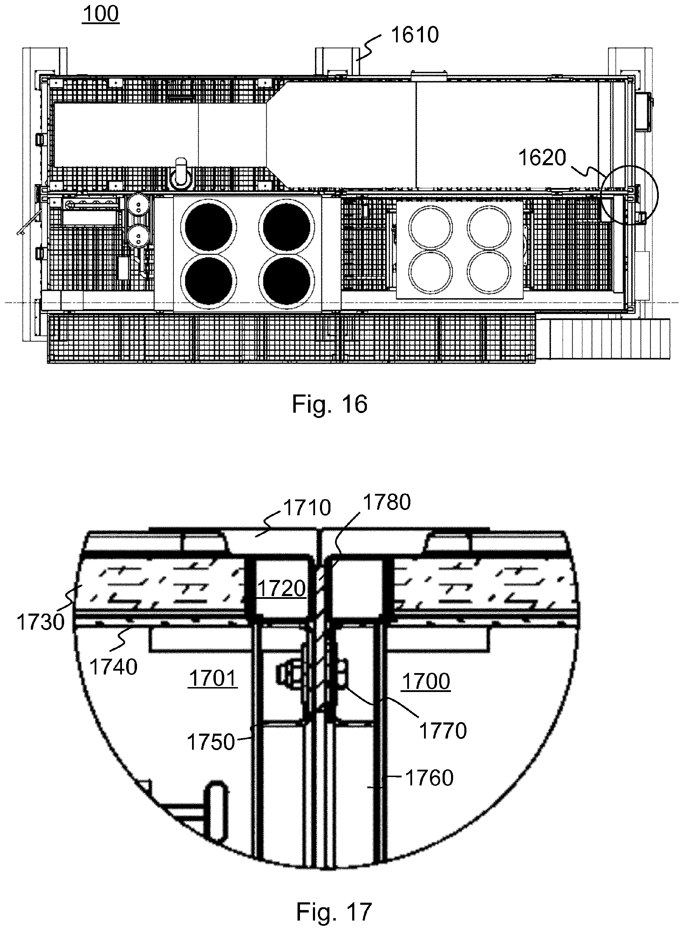

In an embodiment, horizontal reinforcement beams 910-920 may be arranged to the roof area and vertical reinforcement beams 930 in the center area of the system 100. No matter only one vertical reinforcement beam 930 is shown, the system 100 may comprise a plurality of vertical reinforcement beams 930. A dividing wall 940 and a door for a control room 960 is also shown. Vertical reinforcement beams 930 of the adjacent containers of the system 100 may be attached to each other via securing means 950, such as bolts. As illustrated in Fig. 9, the vertical beams 930 are attached at three positions: bottom, middle and up, but positions and number of securing means may vary. A platform 970 for assembling and dissembling (such as steel plate supported by a plurality of concrete bars (three bars in Fig. 9)) is also shown. Fig. 16 shows the system of Fig. 9 from above and illustrates also the platform 970 for the system 100.

Fig. 10 illustrates a mobile container system according to an embodiment of the invention, wherein the system is shown from a cross-sectional view across the axis E of Fig. 9 of the container arrangement. Fig 10 shows an upper corner F for further disclosure.

Fig. 11 illustrates a fire-proof-arrangement in an area F between container roofs and reinforcement beams. This area is illustrated as corner "F" in Fig. 10.

In an embodiment, a first 210 and a second standard-sized container 220 are releasibly securable together, by arranging the respective containers 210, 220 in parallel in a longer direction, each container 210, 220 comprising a cuboid metal frame of standard-sized corners and additional reinforcement beams 1110, 1120. Each container 210, 220 further comprises ceiling 1130, 1140.

In an embodiment, each respective container 210, 220 are secured to each other via locking means 1140 arranged between reinforcement beams 1110, 1120 of the first 210 and the second container 220.

At least a portion of the side walls of the respective containers 210, 220 facing each other, are removed to provide enlarged interior operating space as a test room extending over both containers.

A fire-proof material layer is arranged on inner surface of a ceiling 1130, 1140 of the first 210 and the second container 220 in similar fashion as illustrated in Fig. 4, for example.

In an embodiment, the fire-proof material layer comprise a mineral wool layer and a trim panel covering the mineral wool layer, arranging the mineral wool layer between the container ceiling and the trim panel.

A fire-proof seam 1150 is arranged between the vertical reinforcement beams 1110, 1120 of the containers 210, 220. In Fig. 11, the fire-proof seam 1150 is arranged between the reinforcement beams or top side rails of the standard-sized containers and also extending between the vertical reinforcement beams 1110, 1120 of the containers 210, 220.

In an embodiment, the fire-proof seam 1150 comprises elastic fire-proof sealant.

In an embodiment, a first fire-proof material layer is arranged on the inner surface of the horizontal ceiling 1130, 1140.

The fire-proof element may comprise, for example, mineral wool with thickness of at least 50mm and a trim panel.

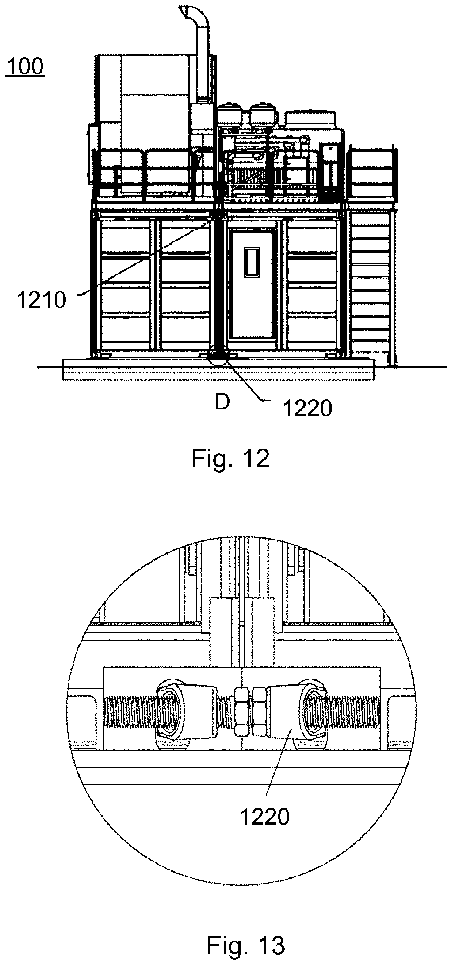

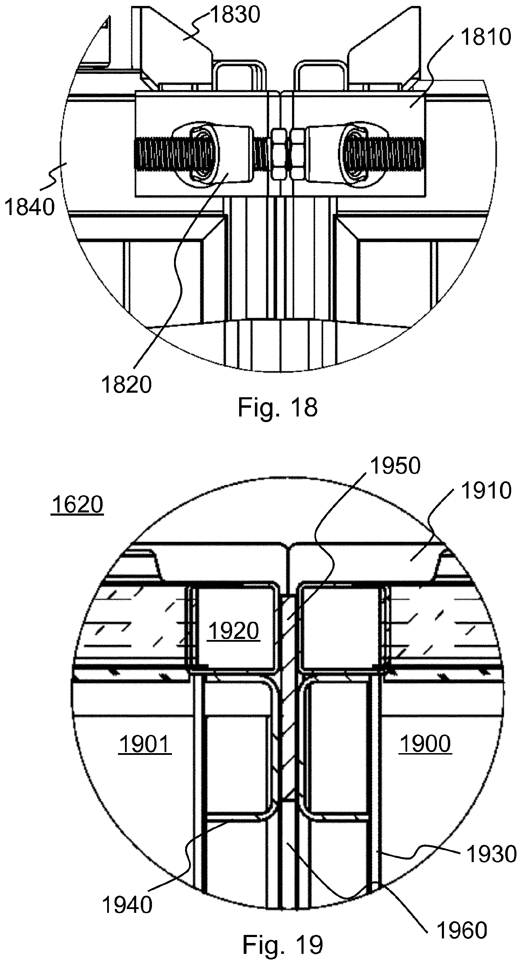

Fig. 12 illustrates a mobile container system 100 according to an embodiment of the invention, wherein the system 100 is shown from a rear-end (double door end) of the container arrangement. Area "D" is identified for further disclosure of Fig. 13 and container bridge fittings 1210, 1220. Fittings on the roof of at least one container above the upper bridge fitting 1210 is further illustrated in Fig. 18.

Fig. 13 illustrates area "D" of Fig. 12 showing container bridge fittings 1220 that interconnects two adjacent containers using the standard-sized corner fittings of the containers.

In an embodiment, there is provided an arrangement for releasably securing a plurality of standard-sized containers together, the arrangement comprising, as shown in Fig. 13, at least two extension elements emerging from corner fittings of adjacent containers, each extension element configured to be attachable from one end to at least one container and a threaded aperture to be connectable to a securing element, such as a threaded rod. The arrangement further comprises a longitudinal securing element with threads configured to be connected to the threaded aperture of the extension element in releasable and tightenable way. The arrangement may be used for securing containers together as well as for separating the containers form each other.

The securing element may be arranged so that at least two extension elements of the securing element are fitted to corner fittings of two adjacent containers, for example.

The shape and size of the extension elements and securing elements of the container bridge fittings 1220 may be formed so that the extension elements engage reliably to corner fittings of the containers. The shape may change depending on the standardized corner fitting shape of the container of use.

In an embodiment, penetrations and passes through at least one wall of at least one of the containers 210, 220 may be arranged. For example, AC unit may be installed at the container 210, 220 front wall. Pass through for supply cable, condensing water pipe and all other wall and roof through passes may be arranged.

Prefabricated inlets may be either circular or rectangular in shape, e.g. 120mm in depth, reaching from an internal trim panel into outer panel.

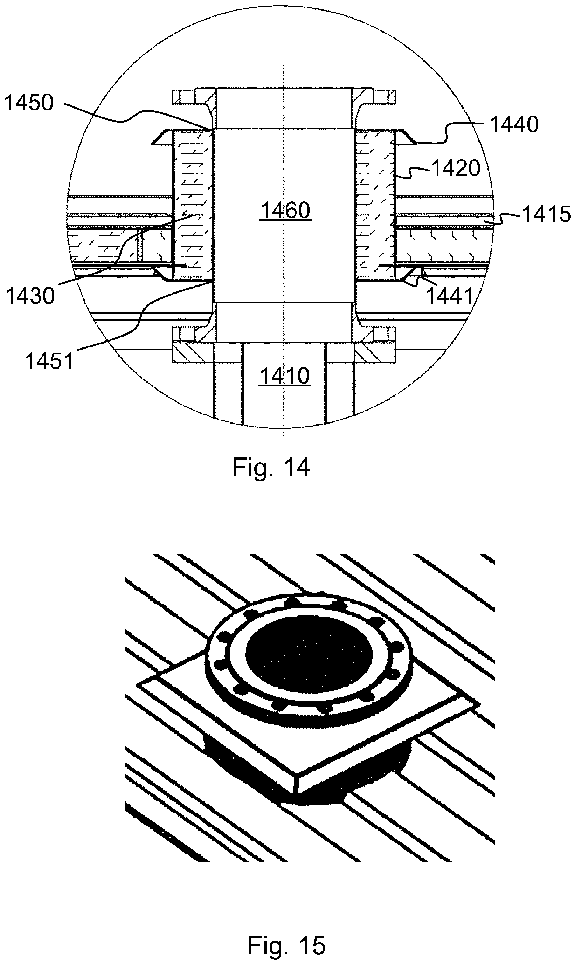

Fig. 14 illustrates an exhaust pipe 1410 prefabricated inlet bushing 1420 that is welded into a roof structure 1415 of at least one of the containers 210, 220.

In an embodiment a prefabricated inlet bushing 1420 is welded into the roof structure 1415. Upper weld 1450 illustrates the weld between an upper end cap plate and a cylindrical part 1460 of the exhaust pipe 1410. Lower weld 1451 illustrates the weld between a lower end cap plate to the cylindrical part 1460 of the exhaust pipe 1410 but not to the inlet bushing 1420 to enable free moving of the exhaust pipe 1410 within the inlet bushing 1420. The space between the inlet bushing 1420 and the exhaust pipe 1410 is filled with fireproof insulation material 1430, such as mineral wool, and open ends of the inlet 1420 are sealed with end cap plates 1440, 1441. The end cap plates 1440, 1441 are welded all around the cylindrical part 1460 of the exhaust pipe 1410. Diameter of the exhaust pipe 1410 may be, for example, 220mm.

Fig. 15 illustrates an exhaust pipe prefabricated inlet bushing that is welded into a roof structure of at least one of the containers from outside view.

Furthermore, for gas pipelines through the roof, a rectangular inlet bushing may be welded into roof plate, using the same principle as with the exhaust pipe inlet. Joint pipes are welded into upper end cap plate. Upper end cap plate is then bolted into inlet bushing. Open ends of the rectangular inlet bushing may be sealed with end cap plates. The space between the end cap plates is filled with fireproof insulation material, such as wool, or fireproof urethane. Inside the container the joint pipes come through the end cap plate. Inner end cap plate is then screwed into inner roof trim panel.

Furthermore, for water pipes through the roof, a corrugated roof plate may be cut open and replaced with a pass through roof plate with welded inlet bushings and the water pipes may be inserted through the inlets. Open ends of the inlets may be sealed with end cap plates as described in relation to exhaust pipes.

In an embodiment, air ducts may be equipped with fire shutoff valves that are preventing the fire from spreading outside a container. Fire shutoff valves comply with fire-resistance rating and are automatically driven in case of fire. In addition to preventing the fire from spreading the shutoff valves also limit the supply of oxygen to the fire. Also the exhaust air duct as well as gasoline pipe is equipped with automatic shutoff valves.

In an embodiment, for structural fire protection of the mobile container system 100, the steel structures of the mobile container 100 are protected from inside against fire that ignites inside, for example by using mineral wool insulation. Few exceptions may be excluded, however. Such structures that are not protected against fire may comprise, for example, structures inside the mobile container system that are completely exposed to fire ignited inside, such as additional supporting columns in the middle of the engine room. The additional supporting columns may be used to provide support for the additional load on the roof and prevent bending the longitudinal roof beam but not necessarily needed at all. In order to maintain dimensional precision between the roof and the floor, but also to absorb structural vibrations of the roof, it is important to prevent the bending. The roof structure supports the load on the roof even without the supporting columns.

Further such structures that are not protected against fire may comprise, for example, structures inside the mobile test unit that are partially exposed to fire ignited inside, such as longitudinal "I"-beam of the roof and upright beams of both gable walls. Those structures may endure additional stress of fire in question given that the oxygen supply is restricted. If necessary those structures may be protected against fire for example with fire protection paint or mineral wool.

In an embodiment, fire protection of wooden materials may be introduced. Control room internal walls and ceiling may be covered with plywood. The plywood is surface treated with fire retardant coating that efficiently prevents the plywood participating with the fire and the smoke formation would be minimal. The plywood used in floors may also be treated against fire in addition to on top of fire resistant plywood there may be arranged an industrial grade rubber mat which takes part with the fire very little. If necessary the plywood can be also treated with the fire protection agent before covering the floor with the rubber mat.

Fig. 16 illustrates a mobile container system 100 according to an embodiment of the invention from above view. A platform 1610 for assembling and dissembling the system 100 of adjacent containers may comprise a plurality of concrete bars covered by a steel plate, for example. The plate may extend over total area of the containers or only partially over the concrete bars, for example. Fire-proof arrangement for control room end 1620 is shown for further disclosure in Fig. 17.

Fig. 17 illustrates a fire-proof-arrangement in front end area (control room end) of the system showing container structures and reinforcement beams. This area is illustrated as portion 1620 in Fig. 16.

In an embodiment, a first 1700 and a second standard-sized container 1701 are releasibly securable together, by arranging the respective containers 1700, 1701 in parallel in a longer direction, each container 1700, 1701 comprising a cuboid metal frame of standard-sized corners 1710 and container ceiling structure 1720. Each container 1700, 1701 further comprises a fire-proof material layer 1730 arranged to inner surface of the ceiling. A cover plate 1740 is arranged to an inner surface of the fire-proof material layer 1730.

In an embodiment, each respective container 1700, 1701 are secured to each other via locking means 1770 arranged between vertical reinforcement beams 1760 of the first and the second container.

In an embodiment, a horizontal reinforcement beam 1750 is arranged to extend horizontally through the system. The horizontal reinforcement beam 1750 may be arranged in several parts and attached to possible vertical reinforcement beams (e.g. beam 930 in Fig. 9) arranged to the system.

A fire-proof seam 1780 is arranged between the vertical reinforcement beams 1760 of the containers 1700, 1701. In Fig. 17, the fire-proof seam 1780 also extends between the container ceiling structure beams 1720 and may also cover the interface of the standard-sized corners 1710 of the adjacent containers 1700, 1701.

In an embodiment, the fire-proof seam 1150 comprises elastic fire-proof sealant.

Fig. 18 illustrates upper fittings 1830 arranged on the roof of at least one container 1840 above the upper bridge fitting 1820 connecting containers using standardized corner fittings 1810 of the containers. The upper fittings 1830 may be added to guide modular roof components exchangably arranged on top of the roof of at least one container.

Fig. 19 illustrates a fire-proof-arrangement in control room end 1620 as shown in Fig. 16 of the system comprising adjacent containers 1900, 1901.

In an embodiment, a first 1900 and a second standard-sized container 1901 are releasibly securable together, by arranging the respective containers 1900, 1901 in parallel in a longer direction, each container 1900, 1901 comprising standard-sized external corners 1910 and a cuboid metal frame of top side rails 1920, and vertical reinforcement beams 1930 connecting to the top side rails 1920. Each container 1900, 1901 further comprises ceiling, side walls, floor, front wall and rear end. The vertical reinforcement beams 1930 are configured to provide further support for the cuboid metal frame together with the horizontal reinforcement beams 1940 to carry the load placed on top of the container(s).

A fire-proof seam 1950 is arranged between the vertical reinforcement beams 1930 of the containers 1900, 1901. In Fig. 19, the fire-proof seam 1950 also extends between the container ceiling structure beams 1920 and may also cover the interface of the standard-sized corners 1910 of the adjacent containers 1900, 1901.

Further fire-proof seam 1960 may be arranged between the vertical reinforcement beams 1930 of the containers 1900, 1901 extending below the horizontal reinforcement beams 1940 all the way of the front wall between the containers 1900, 1901 (control room end).

In an embodiment, the fire-proof seam 1950, 1960 comprises an elastic fire-proof sealant or a combination of different elastic fire-proof sealants.

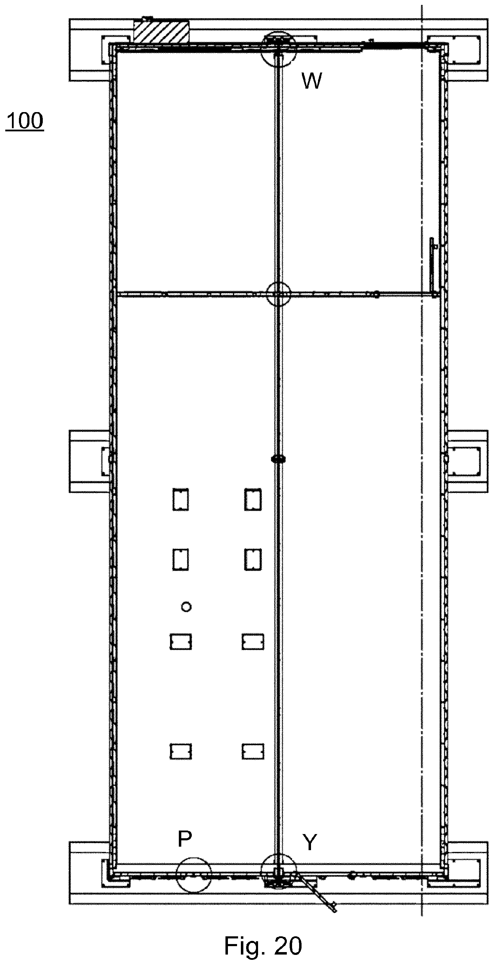

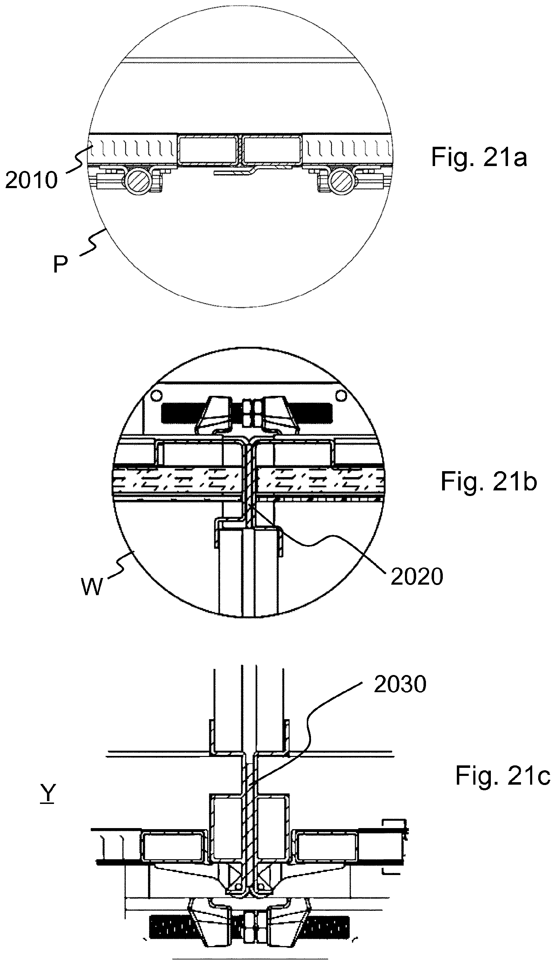

Fig. 20 illustrates a mobile container system 100 from above view according to an embodiment of the invention. Areas of W, Y and P are illustrated for further disclosures in Fig. 21.

Fig. 21 a illustrates a fire-proof-arrangement between a first container and a second container for rear end double doors of the system 100 as earlier shown in Fig. 7 and pointed as area P in Fig. 20. Fire-proof material layer 2010 is shown.

Fig. 21b illustrates a fire-proof-arrangement between a first container and a second container for front end wall (control room end) of the system 100 pointed as area W in Fig. 20. Fire-proof vertical seam 2020 between the containers is shown.

Fig. 21c illustrates a fire-proof-arrangement between a first container and a second container for rear end wall (double doors) of the system 100 pointed as area Y in Fig. 20. Fire-proof vertical seam 2030 between the containers is shown.

Without in any way limiting the scope, interpretation, or application of the claims appearing below, a technical effect of one or more of the example embodiments disclosed herein is an improved solution for providing a mobile test unit. Further technical effect is securing standard-sized containers together. Even further technical effect is an easy to use modular solution that is quick to install, uninstall and low-cost. Still further technical effect is improving fire-proof containers. Still further technical effect is providing a sealed and tight mobile system with improved automatic fire extinction system. Still further technical effect is improving mobile test unit for vehicle components.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

## Claims

1. A mobile container system comprising:
a first and a second standard-sized container releasibly securable together, by arranging the respective containers in parallel in a longer direction, each container comprising a cuboid metal frame with standard-sized corners, the respective containers being attached to each other and further comprising reinforcement beams to provide structural strength;
wherein the respective containers are secured to each other via locking means arranged between at least one standard-sized corner or reinforcement beam of the first container and corresponding standard-sized corner or reinforcement beam of the second container;
further wherein at least a portion of side walls of the respective containers, facing each other, are removed to provide enlarged interior space extending at least partially over both containers;
**characterized in that**
the mobile container system being a mobile test unit system, wherein the portion of the side walls are removed to provide enlarged interior operating space as a test room extending over both containers, and the mobile test unit system further comprising:
a vehicle component exchangably arranged within the test room; and
the mobile container system is configured to provide fire protected enlarged interior, by further comprising:
a fire-proof material layer arranged on inner surface of ceiling, side walls, floor, front wall and rear end of the first and the second container; and
a fire-proof seam arranged to at least one of the following:
front wall between the first and the second container;
rear end between the first and the second container;
rear end between double doors of the first or the second container;
horizontal reinforcement beam of the first or the second container;
vertical reinforcement beam of the first or the second container; and
a standard-sized corner of the first or the second container.

2. The mobile container system of claim 1, wherein the fire-proof material layer comprising:
a mineral wool layer; and
a trim panel covering the mineral wool layer.

3. The mobile container system of claim 1 or 2, wherein the fire-proof seam comprising elastic fire-proof sealant.

4. The mobile container system of any of claims 1 to 3, further comprising a first fire-proof material layer arranged on the inner surface of the horizontal ceiling on a first side of a standard-sized corner of the first or the second container, and a second fire-proof material layer arranged on the inner surface of the vertical side wall on a second side of the standard-sized corner of the first or the second container, wherein the first and the second fire-proof material layers are overlapping each other at least partially to cover an inner surface of the standard-sized corner.

5. The mobile container system of any of claims 1 to 4, further comprising a first fire-proof material layer arranged on the inner surface of the horizontal floor on a first side of a standard-sized corner of the first or the second container, and a second fire-proof material layer arranged on the inner surface of the vertical side wall on a second side of the standard-sized corner of the first or the second container, wherein the first and the second fire-proof material layers are overlapping each other at least partially to cover an inner surface of the standard-sized corner.

6. The mobile container system of any of claims 1 to 5, further comprising at least two ISO standard containers combined together as a mobile workroom, comprising a cuboid metal frame of corners and edge profiles connecting the corners.

7. The mobile container system of any of claims 1 to 6, further comprising a girder plate placed to a hollow interior of a bottom side rail of at least one container when assembling the containers together, wherein a girder plate width is selected so that it matches the diagonal inner length of the interior of the bottom side rail when assembled.

8. The mobile container system of claim 7, wherein the girder plate guides the containers to be attached with each other and leveling floor plates of the adjacent containers.

9. The mobile container system of claim 8, wherein at least a section of the interior of the bottom side rail of at least one container is filled with fire-proof material after placement of the girder plate and attaching the containers together.

10. The mobile container system of any of claims 7-9, wherein a platform is arranged below the containers in order to enable sliding of the second container towards and to connection with the first container.

11. The mobile container system of any of claims 1-10, wherein the vehicle component comprising at least one of the following: a combustion engine, an electric motor, a hybrid system, a battery cell, a gearbox and a powertrain component.

12. The mobile container system of any of claims 1-11, further comprising a modular roof component exchangably arranged on top of the roof of at least one container, the modular roof component comprising at least one of the following:
an air heating system;
a ventilation system;
an air conditioning system;
an air moisturizing system
an air dryer system;
a condenser system;
a silencer system;
a fuel delivery unit;
a compressor unit;
an exhaust gas extractor system;
an exhaust gas after-treatment system;
a calibration gas delivery system;
a battery system; and
a telecommunication system.

13. The mobile container system of claim 12, further comprising a modular inner component exchangably arranged at least partially within one container, the modular inner component comprising at least one of the following:
an air heating system;
a ventilation system;
an air conditioning system;
an air moisturizing system
an air dryer system;
a condenser system;
a silencer system;
a fuel delivery unit;
a compressor unit;
an exhaust gas extractor system;
an exhaust gas after-treatment system;
a calibration gas delivery system;
a battery system; and
a telecommunication system.

14. The mobile container system of any of claims 12-13, wherein a modular component may be partially an inner component and partially a roof component.

15. The mobile container system of any of claims 1-14, further comprising an automatic fire extinction arrangement configured to restrict oxygen inside the mobile container system to a level where burning does not happen, and wherein the interior space of the mobile container system is automatically filled with inert gas and automatically closing openings including doors and air ducts.
